# EUROPÄISCHE PATENTSCHRIFT

(11) **EP 2 542 443 B1**
(45) Veröffentlichungstag und Bekanntmachung des Hinweises auf die Patenterteilung: **08.04.2015**
(21) Anmeldenummer: 11704538.5
(22) Anmeldetag: 03.02.2011
(51) Int. Cl.: G07C 9/00, H01R 13/639, B60L 11/18

(54) **VERFAHREN ZUM LADEN EINER BATTERIE EINES KRAFTFAHRZEUGS**
METHOD FOR CHARGING A BATTERY OF A MOTOR VEHICLE, AND MOTOR VEHICLE
PROCÉDÉ POUR CHARGER UNE BATTERIE D'UN VÉHICULE À MOTEUR, ET VÉHICULE À MOTEUR

(30) Priorität: 01.03.2010 DE 102010009715
(43) Veröffentlichungstag der Anmeldung: 09.01.2013
(73) Patentinhaber: Audi AG, 85045 Ingolstadt (DE)
(72) Erfinder: THEN, Florian, 85051 Ingolstadt (DE); STAATS, Heiko, 85049 Ingolstadt (DE)
(74) Vertreter: Herbst, Matthias Heinz
(86) Internationale Anmeldenummer: PCT/EP2011/000496
(87) Internationale Veröffentlichungsnummer: WO 2011/110261

(56) Entgegenhaltungen:
- DE-A1-102009 021 720
- US-A1- 2009 085 522

## Beschreibung

Die Erfindung betrifft ein Verfahren zum Laden einer Batterie eines Kraftfahrzeugs, wobei es insbesondere um solche Kraftfahrzeuge geht, die über einen elektrischen Antrieb verfügen, für welchen die Batterie die elektrische Energie liefert. Der elektrische Antrieb kann alleine vorgesehen sein oder Teil eines Hybridantriebs mit Verbrennungsmotor sein. Die Erfindung betrifft auch ein Kraftfahrzeug nach dem Oberbegriff des Patentanspruchs 4.

Um die Batterie eines solchen Kraftfahrzeugs zu laden, wird dieses zu einer Ladestation gefahren. Das Kraftfahrzeug verfügt über einen Anschluss, z. B. eine Kontaktbuchse, die mit einem entsprechenden Anschluss der Ladestation, z. B. einem Stecker, gekoppelt wird. Wie beispielsweise aus der DE 694 14 772 T2 bekannt, ist während des Ladens eine Verriegelung wirksam, die ein Trennen der beiden Anschlüsse voneinander, z. B. also das Ziehen des Steckers aus der Buchse, verhindert.

Zum Öffnen der Türen eines Kraftfahrzeugs werden herkömmliche Schlüssel und Funkschlüssel zunehmend durch Transponderschlüssel ersetzt: Ein Fahrzeugführer führt einen Transponder, gehalten von einem geeigneten Element, mit sich. Das Kraftfahrzeug sendet ständig oder wiederholt elektromagnetische Strahlung aus. Der Transponder empfängt die elektromagnetische Strahlung und sendet daraufhin elektromagnetische Strahlung, nämlich ein Antwortsignal, an das Kraftfahrzeug zurück, und dies wird von dem Kraftfahrzeug erfasst. Das Antwortsignal umfasst insbesondere üblicherweise eine Kennung, an der das Kraftfahrzeug den Transponder erkennt.

Im Zusammenhang mit dem Laden von Batterien von Kraftfahrzeugen mit elektrischen Antrieben ist es aus der EP 1 995 109 A1 bekannt, den Transponderschlüssel für das Kraftfahrzeug auch zur Autorisierung gegenüber einer Ladestation zu nutzen.

Das Laden einer Batterie bzw. eines Akkumulators eines Kraftfahrzeugs mit Elektroantrieb dauert im Vergleich zu einem herkömmlichen Vorgang des Betankens eines Kraftfahrzeugs mit Kraftstoff äußerst lange. Nicht immer steht eine solch lange Zeit zur Verfügung. Es kann auch sein, dass der Kraftfahrzeugführer ein längeres Laden geplant hat, dann aber kurzfristig das Kraftfahrzeug benötigt. Es kann daher vorkommen, dass der Ladevorgang unterbrochen werden muss. Zur Unterbrechung des Ladevorgangs hat man bisher funktionale Elemente vorgesehen, z. B. eine Art "Stopp-Knopf" im Kraftfahrzeug oder auch an der Ladestation. Dies erweist sich als umständlich.

Aus der US 2009/008 5522 A1 ist es bekannt, eine tragbare Vorrichtung, die mit einer Kraftfahrzeugeinheit kommunizieren kann, zu nutzen, um einen Vorgang des Ladens eines Elektrofahrzeugs einzuleiten oder zu beenden. Hierbei wird die Tatsache, dass die tragbare Vorrichtung mit der Fahrzeugeinheit nicht kommuniziert, als Weggehen einer Bedienperson interpretiert, sodass mit dem Laden begonnen wird. Sobald wieder eine Kommunikation möglich ist, interpretiert man dies als Rückkehr des Fahrzeugführers, der das Fahrzeug wieder in Betrieb nehmen möchte, und das Laden wird beendet.

Die DE 10 2009 021 720 A1 betrifft eine Steuervorrichtung für ein Elektrofahrzeug, umfassend: eine Türverriegelungs-Bestimmungseinrichtung zum Feststellen eines Verriegelungszustands einer in der Fahrzeugkarosserie vorhandenen Tür; einen Verbinder-Verriegelungsmechanismus, der auf der Seite der Fahrzeugkarosserie vorgesehen ist und der zwischen einem gesperrten Zustand, in dem der Stromzuführungsverbinder und der Stromaufnahmeverbinder in einem verriegelten Zustand angeordnet sind, sowie einem gelösten Zustand, in dem der Stromzuführungsver-binder und der Stromaufnahmeverbinder in einem entriegelten Zustand angeordnet sind, umgeschaltet wird; sowie eine Verbinder-Verriegelungs-Steuereinrichtung zum Schalten des Verbinder-Verriegelungs-Mechanismus in den gesperrten Zustand, wenn sich die Tür in einem verriegelten Zustand befindet.

Es ist Aufgabe der Erfindung, einem Kraftfahrzeugführer eine Unterbrechung des Ladevorgangs zu erleichtern.

Die Aufgabe wird gemäß einem Aspekt der Erfindung durch ein Verfahren mit den Merkmalen gemäß Patentanspruch 1 gelöst und gemäß einem anderen Aspekt der Erfindung durch ein Kraftfahrzeug mit den Merkmalen gemäß Patentanspruch 3 gelöst.

Erfindungsgemäß erfasst somit das Kraftfahrzeug während des Ladens ständig oder wiederholt, ob sich ein vorbestimmter Gegenstand in der Nähe des Kraftfahrzeugs befindet, und bei einem positiven Ergebnis dieses Erfassens wird das Laden abgebrochen und die Verriegelung zwischen den Anschlüssen aufgehoben, so dass die beiden Anschlüsse voneinander trennbar sind.

Der Fahrzeugführer muss daher nur den vorbestimmten Gegenstand mit sich führen, und das Kraftfahrzeug beendet den Ladevorgang selbsttätig, wenn sich der Fahrzeugführer mit dem vorbestimmten Gegenstand in die Nähe des Kraftfahrzeugs begibt. Da der Ladevorgang sehr lang dauert, wird sich der Benutzer im Regelfall zunächst von dem Kraftfahrzeug wegbewegt haben. Vorliegend wird es als Zeichen eines Weiterfahrwunsches angesehen, dass sich der Fahrzeugführer wieder in die Nähe des Kraftfahrzeugs begibt.

Damit es dem Fahrzeugführer möglich ist, sich in die Nähe des Kraftfahrzeugs zu begeben, ohne dass das Laden dauerhaft beendet wird, z. B. wenn er ein Objekt aus dem Kraftfahrzeug herausholen möchte, wird bevorzugt ferner erfasst, ob während einer vorbestimmten Zeitdauer nach Aufheben der Verriegelung die Anschlüsse voneinander getrennt werden (also z. B. ein Stecker gezogen wird), und falls dies nicht der Fall ist, wird erneut eine Verriegelung bewirkt und das Laden fortgesetzt.

Grundsätzlich kann jede Art der Erkennung eines außerhalb des Kraftfahrzeug befindlichen Gegenstands durch das Kraftfahrzeug verwendet werden. Bevorzugt wird aber eine möglicherweise ohnehin im Kraftfahrzeug vorhandene Einrichtung zur Erkennung eines Transponderschlüssels verwendet, der vorbestimmte Gegenstand umfasst also ein tragbares Element mit Transponder, der, wenn er sich in der Nähe des Kraftfahrzeugs befindet, von dem Kraftfahrzeug ausgesandte elektromagnetische Strahlung in ein Antwortsignal an das Kraftfahrzeug umsetzt, welches von dem Kraftfahrzeug erfasst wird, und sobald dies erfasst wird, wird das Laden beendet und die Verriegelung aufgehoben.

Das erfindungsgemäße Kraftfahrzeug weist eine Batterie und eine Anschlusseinrichtung zum Laden der Batterie auf, die mit einem Gegenstück koppelbar ist. Es sind Mittel zum Verriegeln des Gegenstücks an der Anschlusseinrichtung vorgesehen und zusätzlich eine Einrichtung zum Ansteuern eben dieser Mittel zum Verriegeln. Dies sind Merkmale eines herkömmlichen Kraftfahrzeugs mit elektrischem Antrieb. Ferner umfasst das Kraftfahrzeug eine "Keyless-Entry"-Einrichtung, vorliegend jedenfalls zumindest eine Einrichtung zum Erfassen eines in der Nähe des Kraftfahrzeugs befindlichen vorbestimmten Gegenstands, wie insbesondere eines vorbestimmten Transponders.

Das erfindungsgemäße Kraftfahrzeug ist dadurch gekennzeichnet, dass die Einrichtung zum Erfassen (für "Keyless-Entry" insbesondere) mit der Einrichtung zum Ansteuern (für das Verriegeln der Anschlusseinrichtung mit dem Gegenstück) gekoppelt ist, und ferner ist die Einrichtung zum Ansteuern dazu ausgelegt, ein Entriegeln der Mittel zum Verriegeln zu bewirken, wenn der vorbestimmte Gegenstand durch die Mittel zum Erfassen erfasst wird.

Durch die Erfindung werden also zwei Funktionalitäten miteinander in Zusammenhang gebracht, so dass die von dem Kraftfahrzeug bereitgestellten Möglichkeiten effizient genutzt werden. Insbesondere muss nicht eine Funktionalität "Ladevorgang beenden" gesondert bereitgestellt werden, z. B. bedarf es nicht mehr eines Betätigungsknopfes für ein solches Beenden des Ladevorgangs.

Nachfolgend wird die Erfindung am Beispiel der Verwirklichung in einem Fahrzeug mit elektrischem Antrieb näher beschrieben. Hierbei werden weitere Ideen dargestellt, die gleichzeitig in demselben Kraftfahrzeug verwirklicht sein können. Die Darstellung erfolgt unter Bezug auf die Zeichnungen, in der
- Fig. 1: schematisch ein Kraftfahrzeug mit elektrischem Antrieb veranschaulicht, bei dem die vorliegende Erfindung einsetzbar ist,
- Fig. 2: ein Prinzipschaubild zur Erläuterung eines Initiierungsvorgangs vor dem Koppeln einer Ladestation ist,
- Fig. 3: ein Prinzipschaubild zur Erläuterung eines Initiierungsvorgangs nach Ankoppeln einer Ladestation, aber vor dem Laden ist,
- Fig. 4: ein Prinzipschaubild zur Erläuterung eines Verfahrens zum Beenden des Ladevorgangs ist,
- Fig. 5a und 5b: Prinzipschaubilder zur Erläuterung eines Verfahrens zur Herstellung einer Fahrbereitschaft des Kraftfahrzeugs nach Beendigung eines Ladevorgangs sind,
- Fig. 6: schematisch ein Schloss für einen Schlüssel eines Kraftfahrzeugs und über dieses Schloss ansteuerbare Einheiten veranschaulicht,
- Fig. 7: einen Zeitablauf im Zusammenhang mit einem Ladevorgang anhand eines Zeitstrahles veranschaulicht, wobei unterschiedliche Zeiten und Zeitspannen den unterschiedlichen Schaubildern aus den Fig. 2 bis 6 zugeordnet sind.

Ein im Ganzen mit 100 bezeichnetes Kraftfahrzeug mit einem elektrischen Antrieb 10 soll von einem Fahrer 12 bedienbar sein. Zur Versorgung des elektrischen Antriebs 10 mit elektrischer Energie umfasst das Fahrzeug 100 eine Batterie 14. Diese ist mit einer Buchse 16 mit elektrischen Kontakten gekoppelt, über die die Batterie 14 geladen werden kann. Neben dem elektrischen Antrieb kann ein Verbrennungsmotor (nicht gezeigt) vorgesehen sein, dann ist der elektrische Antrieb Teil eines Hybridantriebs.

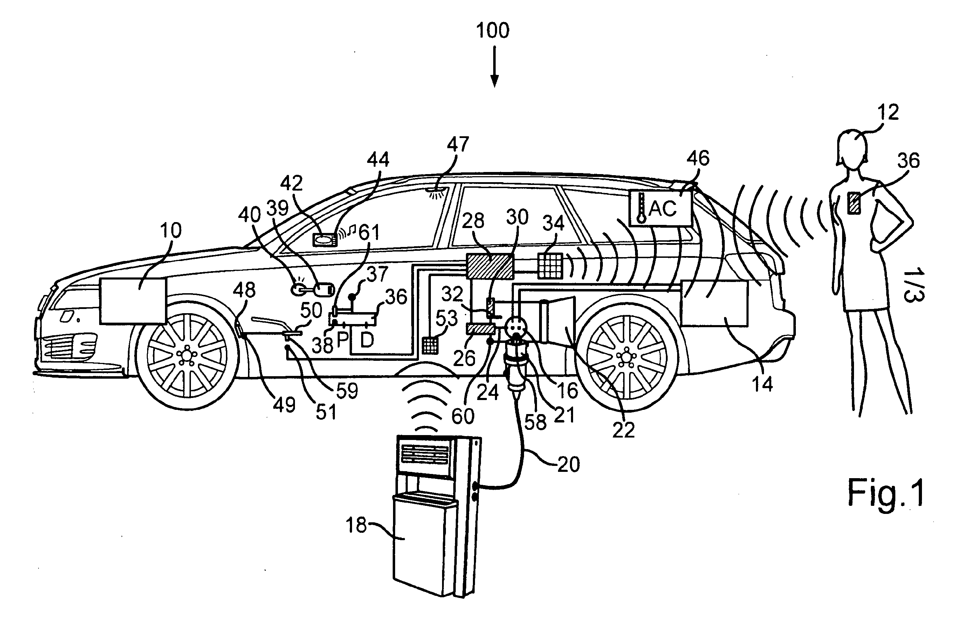

Zum Laden wird das Kraftfahrzeug 100 an eine Ladestation 18 gefahren, von der eine in Fig. 1 mit 20 bezeichnete und schematisch gezeigte Leitung mit einem Stecker 21 mit der Ladebuchse 16 gekoppelt wird, indem der Stecker 21 eingesteckt wird. Im normalen Zustand während der Fahrt des Kraftfahrzeugs ist die Buchse 16 von einem Tankdeckel 22 verschlossen; in Fig. 1 ist dieser im geöffneten Zustand gezeigt.

Steckt der Stecker 21 in der Ladebuchse 16, so lässt sich die Verbindung durch ein schematisch gezeigtes Verriegelungselement 24 verriegeln, wobei ein Aktuator 26 das Verriegelungselement 24 betätigt. Der Aktuator 26 wird von einem Steuergerät 28 angesteuert. Dasselbe Steuergerät steuert auch einen Aktuator 30 für eine Verriegelung 32, die den Tankdeckel 22 während des Betriebs verriegelt. Das Steuergerät 28 ist auch mit einer Einheit 34 gekoppelt, welche selbsttätig einen von dem Kraftfahrzeugführer am Mann getragenen Transponderschlüssel 36 erkennt, für die so genannte Funktion des "Keyless Entry", also das automatische Entriegeln der Kraftfahrzeugtüren, wenn sich der Kraftfahrzeugführer 12 mit dem Transponderschlüssel 36 in die Nähe des Kraftfahrzeugs begibt.

Das Kraftfahrzeug 100 weist eine Schaltung 36 auf, mit der Betriebszustände wählbar sind, insbesondere wahlweise das Kraftfahrzeug in den Zustand zum Fahren verbracht wird ("D"), oder in einen Parkzustand verbracht wird ("P"), bei dem z. B. ein Getriebe verriegelt ist. Die Schaltung 36 umfasst einen Wahlhebel 37. Dessen Stellung wird durch einen Sensor 38 erfasst.

Mit Hilfe eines herkömmlichen Schlüssels 39 lässt sich über ein Schloss 40 das Kraftfahrzeug ansteuern, insbesondere darin befindliche elektrische Geräte sowie der elektrische Antrieb 10 selbst. Als Beispiel für elektrische Geräte seien ein Navigationssystem 42 sowie ein Radio mit Lautsprecher 44 genannt. Auch eine Klimaanlage 46 lässt sich über das Schloss 40 in Betrieb setzen, genauso eine Innenbeleuchtung/Lampe 47. Schließlich verfügt das Kraftfahrzeug 100 noch über eine Feststellbremse 48, welche über einen Betätigungshebel 50 angelegt werden kann, indem dieser Hebel gezogen wird. Ein Sensor 49 an der Feststellbremse 48 und ein Sensor 51 an dem Betätigungshebel 50 erfassen den Zustand "Bremse angelegt". Die Feststellbremse 48 ist durch einen Riegel 59 im angezogenen Zustand blockierbar, der Wahlhebel 37 durch einen Riegel 61 in der Parkstellung blockierbar.

Ein Funkempfänger 53 kann externe Signale empfangen.

Es wird nachfolgend beschrieben, wie der Vorgang eines Ladens des Kraftfahrzeugs 100 durch die Ladestation 18 durchlaufen wird.

Zunächst einmal muss der Kraftfahrzeugführer 12 das Kraftfahrzeug 100 zur Ladestation 18 bewegen. Damit die Ladestation 18 über die Leitung 20 mit der Buchse 16 gekoppelt werden kann, muss der Tankdeckel 22 geöffnet werden. Im Grundzustand, während des normalen Fahrbetriebs des Kraftfahrzeugs 100, ist der Tankdeckel 22 durch das Verriegelungselement 32 geschlossen.

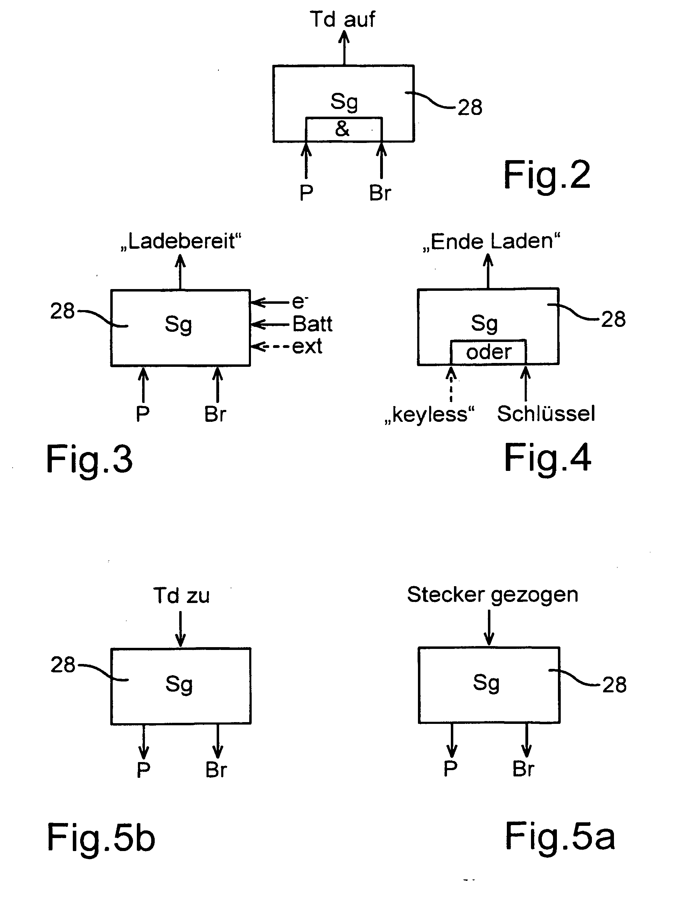

Vorliegend soll der Tankdeckel 22 erst dann verriegelt werden, wenn der Wahlhebel 37 der Automatikschaltung 36 in der Parkstellung "P" steht. Dies wird durch den Sensor 38 erfasst. Gleichzeitig soll die Feststellbremse 48 anliegen, also der Betätigungshebel 50 gezogen sein. Dies wird durch die Sensoren 49 und 51 erfasst. Ist sowohl die Stellung "P" erreicht, als auch die Bremse gezogen ("BR"), so wird gemäß Fig. 2 durch das Steuergerät 28 der Aktuator 30 dazu gebracht, den Tankdeckel 22 zu entriegeln ("Td auf").

Wenn die Parkstellung des Automatikgetriebes 36 eingestellt ist und gleichzeitig die Feststellbremse 48 anliegt, ist ein Wegrollen des Kraftfahrzeugs wirksam unterbunden. Dann ist ein sicherer Zustand hergestellt, in dem die Ladestation 18 mit der Ladebuchse 16 über einen Stecker gekoppelt werden kann. Ist diese Sicherheit nicht gegeben, ist eine Verbindung nicht möglich, weil der Tankdeckel 22 geschlossen bleibt.

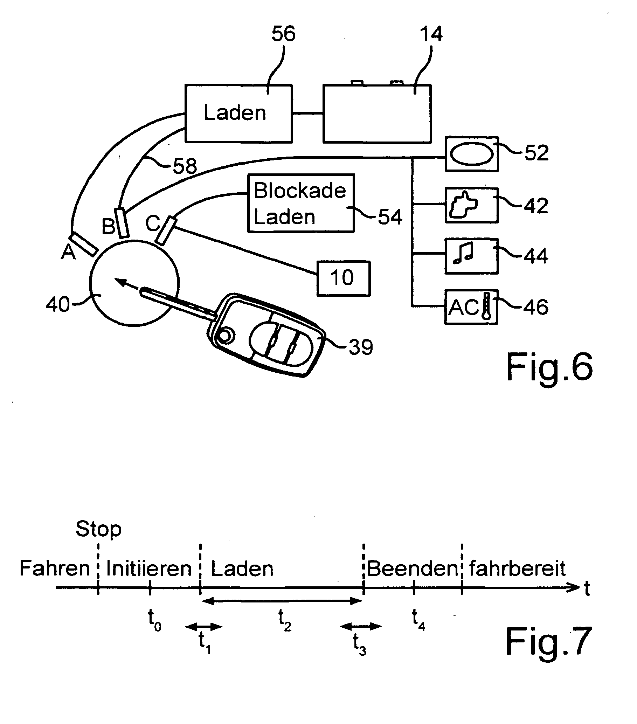

Der anhand von Fig. 2 beschriebene Vorgang wird insbesondere während einer Initiierungsphase zu einem in Fig. 7 beispielhaft gezeigten Zeitpunkt to durchgeführt.

Nach Beendigung des Vorgangs gemäß Fig. 2 kann der Stecker 21 in die Buchse 16 eingesteckt werden.

Nun soll gewährleistet sein, dass dieser Stecker 21 während des Ladens nicht unvermittelt herausgezogen wird, denn dann könnte die Batterie 14 oder auch die Ladestation 18 Schaden nehmen, und auch eine den Stecker 21 herausziehende Person wäre gefährdet. Aus diesem Grund wird der Stecker 21 während des Ladens durch die Verriegelungseinheit 24 verriegelt.

Das Verriegeln erfolgt vor dem Einsetzen des eigentlichen Ladens unter vorbestimmten Bedingungen, die nachfolgend anhand von Fig. 3 erläutert werden:
Nach wie vor soll der Wahlhebel 37 in der Parkstellung ("P") sein, und die Feststellbremse 48 soll wirksam sein ("BR"). Dies wird durch die Sensoren 38 und 49, 51 erfasst. Gleichzeitig soll die Batterie 14 in einen bestimmten Zustand versetzt sein ("BATT"), und auch weitere elektrische Einrichtungen ("e⁻") sollen in einem solchen Zustand sein, dass sie durch den Ladevorgang nicht in ihrem Betrieb beeinträchtigt oder beschädigt werden. Schließlich kann zusätzlich vorgesehen sein, dass ein externes Signal ("ext") beim Funkempfänger 53 eingeht, insbesondere von der Ladestation 18, demgemäß eine Freigabe für das Laden erfolgt ist. Ein solches Freigabesignal kann beispielsweise dann abgegeben werden, wenn der Fahrzeugführer 12 vorab eine bestimmte Menge an Energie (kWh) bezahlt hat. Erst, wenn diese Bedingungen sämtlich erfüllt sind, stellt das Steuergerät 28 ("SG") den Zustand der Ladebereitschaft fest. Erst dann wird ein Stromfluss von der Ladestation 18 zur Batterie 14 über die Buchse 16 ermöglicht.

Der anhand der Fig. 3 erläuterte Vorgang erfolgt im Übergang von der Phase einer Initiierung zur Phase des Ladens zu einem Zeitpunkt t₁, siehe die verschiedene Möglichkeiten für den Zeitpunkt t₁ angehende Zeitspanne in Fig. 7.

Es kann nun sein, dass sich der Fahrzeugführer 12 während des Ladens in das Kraftfahrzeug 100 begeben möchte und dort Funktionen des Kraftfahrzeugs nutzen möchte.

Es ist bekannt, dass Schlösser nach Art des in Fig. 6 näher gezeigten Schlosses 40 ermöglichen, dass ein Schlüssel 39 in drei unterschiedliche Stellungen A, B und C verbringbar sind. Die Stellung A entspricht einem Stillstand des Kraftfahrzeugs und einem Ausgeschaltetsein sämtlicher Geräte, also einem Ruhe-Betriebszustand. In der Stellung B fährt das Kraftfahrzeug, der Antrieb 10 ist also eingeschaltet, das Kraftfahrzeug befindet sich im Fahr-Betriebszustand, wenn zuvor der Schlüssel in Stellung C gebracht wurde. Die Stellung B kann eine Zwischenstellung sein. Bei Kraftfahrzeugen mit Verbrennungskraftmaschine entspricht dieser Zwischenstellung B die so genannte "Klemme 15" ein. In der Zwischenstellung sind das Navigationsgerät 42 und das Radio 44 sowie die Klimaanlage 46 sowie gegebenenfalls ein Bildschirm 52, insbesondere für ein Fernseher, mit Strom versorgt und können in Betrieb gesetzt sein. Ferner kann die Lampe 47 der Innenbeleuchtung zum Leuchten gebracht werden.

Es versteht sich von selbst, dass kein Übergang während des Ladevorgangs nach Zustand C möglich ist, indem eine Einheit 54 für eine Blockade des Ladens sorgt. Umgekehrt sorgt bei der Stellung A und B des Schlüssels eine Einheit 56 dafür, dass die Batterie 14 geladen wird.

Vorliegend soll auch bei Stellung B eine Verbindung 58 zur Einheit 56 hergestellt sein, damit auch bei dieser Zwischenstellung B ein Laden durch die Einheit 56 ermöglicht ist.

Somit können während des Ladens das Navigationsgerät 42, das Radio 44, die Klimaanlage 46, die Lampe 47 und der Bildschirm 52 in Betrieb gehalten werden. Der Fahrzeugführer 12, der sich im Kraftfahrzeug 100 befindet, erfährt eine angenehme Klimatisierung des Kraftfahrzeugs, kann das vollständige Infotainmentsystem des Kraftfahrzeugs 100 nutzen, und dieses ist genügend gut beleuchtet.

Der anhand von Fig. 6 erläuterte Zustand kann zu beliebigen Zeitpunkten t₂ während des Ladens eingestellt sein, vgl. Fig. 7.

Das Laden einer elektrischen Batterie 14 dauert verhältnismäßig lange, insbesondere mehrere Stunden. Es kann nun sein, dass ein Kraftfahrzeugführer 12 das Laden vorzeitig beenden möchte. Dies wird vorliegend durch eine in dem Kraftfahrzeug 100 bereitgestellte Funktionalität erleichtert: Die Einheit 34 erfasst, wenn der Benutzer 12 mit dem für die Funktionalität des "Keyless-Go" bereitgestellten Transponderschlüssel 36 in die Nähe des Kraftfahrzeugs 100 kommt. Dies wird dem Steuergerät 28 über Signale mitgeteilt. Das Steuergerät 28 beendet dann automatisch den Ladevorgang ("Ende Laden") und z. B. wird auch das Verriegelungselement 24 durch den Aktuator 26 entriegelt.

Gleichermaßen kann der Ladevorgang beendet werden, wenn der Kraftfahrzeugführer 12 mit Hilfe eines herkömmlichen Schlüssels das Kraftfahrzeug entweder öffnet oder diesen Schlüssel 39 in das Schloss 40 steckt.

Naturgemäß möchte nicht jeder Kraftfahrzeugführer 12, der in die Nähe seines Kraftfahrzeugs 100 beim Ladevorgang kommt, den Ladevorgang beenden. Aus diesem Grund wird erfasst, ob der Fahrzeugführer 12 nachfolgend den Stecker aus der Buchse 16 zieht, oder ob er den Tankdeckel 22 verschließt, ob nach wie vor Strom zur Batterie 14 fließt, oder ob sonst wie die Fortsetzung des Ladevorgangs unmöglich gemacht wird. Erfasst das Steuergerät 28 derartiges nicht, so wird das Laden nach einer vorbestimmten Zeitdauer wieder aufgenommen und der Ladevorgang fortgesetzt.

Der anhand von Fig. 4 erläuterte Vorgang erfolgt zu einem Zeitpunkt t₃ während einer in Fig. 7 dargestellten Zeitdauer im Übergang vom Laden zum Beenden des Ladens.

Es soll nun verhindert werden, dass ein Kraftfahrzeugführer das Kraftfahrzeug in Betrieb nimmt, während die Ladestation 18 weiter mit dem Kraftfahrzeug 100 gekoppelt ist. Aus diesem Grund ist vorgesehen, dass ein Verbringen des Wahlhebels 37 aus der Parkstellung "P" der Automatikschaltung 36 heraus zunächst nicht möglich, z. B. weil der Wahlhebel 37 in der Parkstellung "P" mit dem Riegel 61 verriegelt ist. Genauso wird durch den Riegel 59 verhindert, dass die Feststellbremse 48 gelöst wird.

Bei einer Alternative wird diese Verriegelung aufgehoben, wenn der Stecker aus der Buchse 16 gezogen ist, was durch einen geeigneten Sensor 58 erfasst werden kann. Wie in Fig. 5a gezeigt, wird erst nach Ziehen des Steckers der Wahlhebel 37 wieder freigegeben bzw. die Bremse "BR" wieder lösbar gemacht.

Alternativ kann vorgesehen sein, dass zunächst der Tankdeckel 22 geschlossen werden muss, was z. B. durch einen Sensor 68 erfasst werden kann, und das Steuergerät 28 bewirkt erst bei geschlossenem Tankdeckel, dass der Wahlhebel 37 aus der Parkstellung "P" herausbewegt werden kann und die Feststellbremse 48 gelöst werden kann ("BR").

Der anhand der Fig. 5a und 5b erläuterte Vorgang erfolgt während einer Phase des Beendens des Ladens, z. B. zum in der Fig. 7 beispielhaft gezeigten Zeitpunkt t₄.

Anschließend ist das Kraftfahrzeug fahrbereit, und es kann mit geladener Batterie 14 der elektrische Antrieb 10 wieder in Betrieb gesetzt werden.

## Patentansprüche

1. Verfahren zum Laden einer Batterie eines Kraftfahrzeugs (100), umfassen das Koppeln eines Anschlusses (20) einer Ladestation (18) mit einem Anschluss (16) an dem Kraftfahrzeug (100) unter Verwendung einer Leitung (20), wobei das Kraftfahrzeug (100) während des Ladens ständig oder wiederholt erfasst, ob sich ein vorbestimmter Gegenstand umfassend ein tragbares Element mit Transponder (36) in der Nähe des Kraftfahrzeugs befindet, und dass bei einem positiven Ergebnis dieses Erfassens das Laden, insbesondere eine Energieaufnahme, abgebrochen wird,
**dadurch gekennzeichnet, dass**
während des Ladens eine Verriegelung (24) wirksam ist, die ein Trennen der beiden Anschlüsse (20, 16) voneinander verhindert, und, wenn das Laden abgebrochen wird, die Verriegelung (24) aufgehoben wird, so dass die beiden Anschlüsse (16, 20) voneinander trennbar sind, wobei ferner erfasst wird, ob während einer vorbestimmten Zeitdauer nach Aufheben der Verriegelung die Anschlüsse (16, 20) voneinander getrennt werden, und falls dies nicht der Fall ist, die Verriegelung erneut erfolgt und das Laden fortgesetzt wird.

2. Verfahren nach Anspruch 1, wobei wenn das tragbare Element mit Transponder (36) in der Nähe des Kraftfahrzeugs (100) befindlich ist, von dem Kraftfahrzeug ausgesandte elektromagnetische Strahlung in ein Antwortsignal an das Kraftfahrzeug (100) umsetzt, welches von dem Kraftfahrzeug erfasst wird.

3. Kraftfahrzeug (100) mit einer Batterie (14) und einer Anschlusseinrichtung (16) zum Laden der Batterie (14), wobei die Anschlusseinrichtung (16) mit einer Leitung (20) koppelbar ist, ferner umfassend eine Einrichtung (34) zum Erfassen eines in der Nähe des Kraftfahrzeugs (100) befindlichen vorbestimmten Gegenstands (36) umfassend einen tragbaren Transponder, wobei das Laden, insbesondere eine Energieaufnahme, abgebrochen wird, wenn der vorbestimmte Gegenstand (36) durch die Mittel zum Erfassen (34) erfasst wird,
**dadurch gekennzeichnet, dass**
das Kraftfahrzeug Mittel (24, 26) zum Verriegeln der Leitung (20) an der Anschlusseinrichtung (16) sowie eine Einrichtung (28) zum. Ansteuern dieser Mittel (24, 26) zum Verriegeln umfasst, und die Einrichtung (34) zum Erfassen mit der Einrichtung (28) zum Ansteuern gekoppelt ist, wobei während des Ladens die Einrichtung (28) zum Ansteuern ein Verriegeln der Mittel zum Verriegeln (24) bewirkt, und die Einrichtung (28) zum Ansteuern dazu ausgelegt ist, ein Entriegeln der Mittel zum Verriegeln (24) zu bewirken, wenn der vorbestimmte Gegenstand (36) durch die Mittel zum Erfassen (34) erfasst wird, wobei die Einrichtung (28) zum Ansteuern weiterhin ausgelegt ist, zu erfassen, ob während einer vorbestimmten Zeitdauer nach Aufheben der Verriegelung die Anschlüsse (16, 20) voneinander getrennt werden, und falls dies nicht der Fall ist, die Verriegelung erneut zu bewirken und das Laden fortzusetzen.

## Claims

1. Method for charging a battery of a motor vehicle (100), comprising coupling a connector (20) of a charging station (18) to a connector (16) on the motor vehicle (100) using a line (20), the motor vehicle (100) continuously or repeatedly detecting, during charging, whether there is a predetermined object comprising a portable element having a transponder (36) in the vicinity of the motor vehicle and in the event of a positive result of said detection, charging, more particularly energy absorption, is aborted,
**characterised in that**
during charging, a locking mechanism (24) is active which prevents the two connectors (20, 16) from disconnecting from each other, and, if charging is aborted, the locking mechanism (24) is released such that the two connectors (16, 20) can be disconnected from each other, it also being detected whether, over a predetermined length of time, the connectors (16, 20) are disconnected from each other once the locking mechanism has been released, and if this is not the case, the locking mechanism re-engages and charging continues.

2. Method according to claim 1, wherein, if the portable element which comprises a transponder (36) is in the vicinity of the motor vehicle (100), electromagnetic radiation transmitted by the motor vehicle is converted into a response signal to the motor vehicle (100) which is detected by the motor vehicle.

3. Motor vehicle (100) comprising a battery (14) and a connector device (16) for charging the battery (14), it being possible to couple the connector device (16) to a line (20), and further comprising a device (34) for detecting a predetermined object (36) which is in the vicinity of the motor vehicle (100) and comprises a portable transponder, charging, more particularly energy absorption, being aborted if the predetermined object (36) is detected by the detection means (34),
**characterised in that**
the motor vehicle comprises means (24, 26) for locking the line (20) to the connector device (16) and a device (28) for controlling said locking means (24, 26), and the detection device (34) is coupled to the control device (28), the control device (28) causing the locking means (24) to lock during charging, and the control device (28) being designed so as to cause the locking means (24) to unlock when the predetermined object (36) is detected by the detection means (34), the control device (28) also being configured to detect whether, over a predetermined length of time, the connectors (16, 20) are disconnected from each other once the locking mechanism has been released, and if this is not the case, to cause the locking mechanism to re-engage and charging to continue.

## Revendications

1. Procédé de chargement d'une batterie d'un véhicule à moteur (100), comprenant le couplage d'une borne (20) d'une station de chargement (18) à une borne (16) sur le véhicule à moteur (100) en utilisant une ligne (20), dans lequel le véhicule à moteur (100) détecte en permanence ou de façon répétée au cours du chargement si un objet prédéterminé comprenant un élément portable avec un répéteur (36) se trouve au voisinage du véhicule à moteur et en ce que, dans le cas d'un résultat positif de cette détection, le chargement, en particulier une réception d'énergie, est interrompu(e),
**caractérisé en ce que**,
au cours du chargement, un verrouillage (24) est effectif, lequel verrouillage empêche une séparation mutuelle des deux bornes (20, 16) et, lorsque le chargement est interrompu, le verrouillage (24) est levé, si bien que les deux bornes (16, 20) peuvent être séparées l'une de l'autre, dans lequel on détecte en outre si, au cours d'une période de temps prédéterminée après la levée du verrouillage, les bornes (16, 20) sont séparées l'une de l'autre et, si ce n'est pas le cas, le verrouillage se fait à nouveau et le chargement est poursuivi.

2. Procédé selon la revendication 1, dans lequel, lorsque l'élément portable avec le répéteur (36) se trouve au voisinage du véhicule à moteur (100), un rayonnement électromagnétique émis par le véhicule à moteur est converti en un signal de réponse sur le véhicule à moteur (100) qui est détecté par le véhicule à moteur.

3. Véhicule à moteur (100) équipé d'une batterie (14) et d'un dispositif de connexion (16) pour le chargement de la batterie (14), dans lequel le dispositif de connexion (16) peut être couplé à une ligne (20), comprenant en outre un dispositif (34) pour détecter un objet prédéterminé (36) se trouvant au voisinage du véhicule à moteur (100) et comprenant un répéteur portable, dans lequel le chargement, en particulier une réception d'énergie, est interrompu(e) lorsque l'objet prédéterminé (36) est détecté par les moyens de détection (34),
**caractérisé en ce que** :
le véhicule à moteur comprend des moyens (24, 26) pour le verrouillage de la ligne (20) sur le dispositif de connexion (16) ainsi qu'un dispositif (28) pour la commande de ces moyens de verrouillage (24, 26) et le dispositif de détection (34) est couplé au dispositif de commande (28), dans lequel, au cours du chargement, le dispositif de commande (28) active un verrouillage des moyens de verrouillage (24), et le dispositif de commande (28) est conçu pour activer un déverrouillage des moyens de verrouillage (24) lorsque l'objet prédéterminé (36) est détecté par les moyens de détection (34), dans lequel le dispositif de commande (28) est conçu par ailleurs pour détecter si, au cours d'une période de temps prédéterminée après levée du verrouillage, les bornes (16, 20) sont séparées l'une de l'autre et, si ce n'est pas le cas, activer à nouveau le verrouillage et poursuivre le chargement.
